# EUROPÄISCHE PATENTSCHRIFT

(11) **EP 2 429 677 B1**
(45) Veröffentlichungstag und Bekanntmachung des Hinweises auf die Patenterteilung: **16.07.2014**
(21) Anmeldenummer: 10722599.7
(22) Anmeldetag: 12.05.2010
(51) Int. Cl.: B01D 29/90, B01D 29/15, B01D 46/00

(54) **FILTER**
FILTER
FILTRE

(30) Priorität: 14.05.2009 DE 102009021420; 17.08.2009 DE 102009037736
(43) Veröffentlichungstag der Anmeldung: 21.03.2012
(73) Patentinhaber: Robert Bosch GmbH, 70469 Stuttgart (DE)
(72) Erfinder: HAUSDORF, Jürgen, 67166 Otterstadt (DE); OTTO, Konrad, 68723 Schwetzingen (DE)
(74) Vertreter: Thürer, Andreas
(86) Internationale Anmeldenummer: PCT/EP2010/002923
(87) Internationale Veröffentlichungsnummer: WO 2010/130430

(56) Entgegenhaltungen:
- EP-A2- 0 318 993
- WO-A1-03/059821
- FR-A1- 2 629 371
- US-A- 1 822 006
- US-A- 4 113 618
- US-A- 4 298 465
- US-A1- 2002 134 725

## Beschreibung

Die Erfindung betrifft einen Filter, insbesondere einen Hydraulikfilter, gemäß dem Oberbegriff des Patentanspruchs 1.

In der DE 43 10 492 A1 ist ein derartiger Filter offenbart. Dieser hat ein topfförmiges Filtergehäuse, in das ein etwa hohlzylindrisches Filterelement eingesetzt ist. Das Filtergehäuse ist von einem Filterkopf verschlossen, wobei das Filterelement etwa zwischen einem Gehäuseboden und dem Filterkopf fixiert ist. In dem Filterkopf sind ein Zulaufanschluss mit einem Zulaufkanal und ein Ablaufanschluss mit einem Ablaufkanal eingebracht. Der Zulaufkanal mündet in einem von einer Außenfläche des Filterelements und dem Filtergehäuse begrenzten Zulaufraum, von dem zu filterndes Druckmittel etwa radial in das Filterelement strömt. Der Ablaufkanal ist mit einem von einer Innenfläche des Filterelements begrenzten Innenbereich verbunden, von dem aus das gefilterte Druckmittel über den Ablaufkanal zum Ablaufanschluss strömt. Der Zulaufkanal ist zur Verbindung des Zulaufanschlusses und des Zulaufraums etwa rechtwinklig ausgestaltet.

Diese Lösung hat den Nachteil, dass ein derartiger Filter eine geringe Standzeit aufgrund einer schnellen Verschmutzung durch gefilterte Stoffe aufweist.

Die Druckschrift US 2002/0134725 A1 offenbart einen Filter gemäß dem Oberbegriff des Patentanspruchs 1, bei dem das zu filternde Druckmittel, bevor es durch ein inneres Filterelement strömt, von schwereren Partikeln befreit wird. Dazu wird das Druckmittel auf einer spiralförmigen bzw. schraubenförmigen Bahn in das Filtergehäuse geleitet, wobei erhöhte Zentrifugalkräfte auf die auszuscheidenden Partikel wirken.

Die Schrift US 1,822,006 zeigt einen Filter, mit einem Filterkopf und einem Filtergehäuse, wobei sowohl der Filterkopf und auch das Filtergehäuse einen ringförmigen Zulaufraum um das Filterelement herum ausbilden. In den Zulaufraum ist ein spiralförmiger Einsatz eingesetzt. Der Einsatz segmentiert den Zulaufraum in einen spiralförmigen Kanal, der die gesamte Höhe des Filterelements überdeckt und das Filterelement dabei mehrmals umläuft.

Der Erfindung liegt die Aufgabe zugrunde, einen Filter zu schaffen, der durch eine dem gegenüber verlängerte Standzeit gekennzeichnet ist. Diese Aufgabe wird gelöst durch einen Filter mit den Merkmalen des Patentanspruch 1.

Erfindungsgemäß hat ein Filter, insbesondere ein Hydraulikfilter zum Abscheiden fester Partikel aus einem Mittel, insbesondere Druckmittel oder Gas, ein Filtergehäuse mit einem Zulauf- und einem Ablaufkanal. In dem Filtergehäuse ist ein Filterelement angeordnet. Eine Strömungsrichtung des Mittels ist von einer Außenfläche zu einem mit dem Ablaufkanal verbundenen Innenbereich des Filterelements vorgesehen. Die Außenfläche begrenzt zusammen mit dem Filtergehäuse einen Zulaufraum, der mit dem Zulaufkanal verbunden ist. Der Zulaufkanal und/oder der Zulaufraum sind derart ausgestaltet, dass auf das in den Zulaufraum einströmende Mittel und auf die festen Partikel eine etwa weg vom Filterelement weisende Zentrifugalkraft wirkt.

Ein Filterkopf verschließt das Filtergehäuse stirnseitig. Der Zulauf- und Ablaufkanal ist einfach in dem Filterkopf ausgebildet.

Der Zulaufkanal hat einen schräg zu einer Filterlängsachse sich erstreckenden und etwa zwischen dem Filterelement und dem Filtergehäuse mündenden Schrägkanalabschnitt, wodurch das durch diesen Schrägkanalabschnitt strömende Druckmittel tangential zum Filterelement beschleunigt ist und sich dann weiter schraubenförmig um das Filterelement herum in den Zulaufraum entlang der Filterlängsachse bewegt.

Der Zulaufkanal weist erfindungsgemäß einfach neben dem Schrägkanalabschnitt einen radial zur Filterlängsachse sich erstreckenden und mit einem Zulaufanschluss verbundenen Radialkanalabschnitt und einen weiteren etwa parallel zur Filterlängsachse sich erstreckenden und in dem Filtergehäuse mündenden Längskanalabschnitt auf. Durch den Längskanalabschnitt kann Druckmittel, zusätzlich zum Schrägkanalabschnitt in den Zulaufraum strömen, wodurch ein hoher Druckmitteldurchsatz durch den Filter mit einem recht geringen Strömungswiderstand ermöglicht ist. Gleichzeitig ist das Filterelement durch die tangentiale Beschleunigung des Mittels bzw. Druckmittels über den Schrägkanalabschnitt besser umströmt, wodurch die Partikel gleichmäßiger von dem Filterelement ausgefiltert werden können und einseitige Partikelrückstände am Filterelement vermieden sind. Dies führt zu einer gleichmäßigen Verschmutzung des Filterelements und dadurch zu einer verlängerten Standzeit des erfindungsgemäßen Filters. Des Weiteren können Partikel in dem Druckmittel durch die Zentrifugalkraft unabhängig von dem Filterelement aus diesem gefiltert werden.

Vorzugsweise ist das Filtergehäuse etwa topfförmig und das Filterelement etwa hohlzylindrisch ausgestaltet, wobei beide Komponenten etwa koaxial zueinander und zu einer Filterlängsachse angeordnet sind. Hierdurch ist es möglich, dass das Filterelement mit geringen Strömungsturbulenzen von dem Druckmittel umströmbar ist.

In weiterer Ausgestaltung der Erfindung ist etwa im Längskanalabschnitt ein Strömungsleitelement derart ausgestaltet, dass über das Strömungsleitelement strömendes Druckmittel etwa in Richtung zum Schrägkanalabschnitt gelenkt ist. Dies hat den Vorteil, dass die Tangentialbeschleunigung in dem Schrägkanalabschnitt durch das Strömungsleitelement unterstützt ist.

Bevorzugterweise ist ein dem Filterkopf gegenüber liegender Gehäuseboden des Filtergehäuses konkav ausgebildet, um die von der Zentrifugalkraft und der Strömungskraft des Druckmittels zum Gehäuseboden bewegten Partikel zu sammeln.

Zum Entfernen der in dem konkav ausgebildeten Gehäuseboden des Filtergehäuses angesammelten Partikel ist im Scheitelbereich des Gehäusebodens eine mit einem Verschlusselement verschließbare Bodenöffnung vorgesehen, durch die beispielsweise bei einer Filterwartung die genannten Partikel entfernt werden können.

Mit Vorteil ist der Filter ein Leitungsfilter oder Doppelfilter.

Sonstige vorteilhafte Weiterbildungen der Erfindung sind Gegenstand weiterer Unteransprüche.

Im Folgenden wird ein bevorzugtes Ausführungsbeispiel der Erfindung anhand schematischer Zeichnungen näher erläutert. Es zeigen:
Figur 1 einen Vollschnitt durch einen Filter gemäß einem Ausführungsbeispiel;
Figur 2 einen Längsschnitt parallel zum Vollschnitt aus Figur 1 durch den Filter;
Figur 3 einen um 90° zur Zeichenebene der Figur 1 versetzten Vollschnitt durch den Filter;
Figur 4 einen Längsschnitt parallel zum Vollschnitt aus Figur 3 durch den Filter; und
Figur 5 eine perspektivische Schnittansicht des Filters.

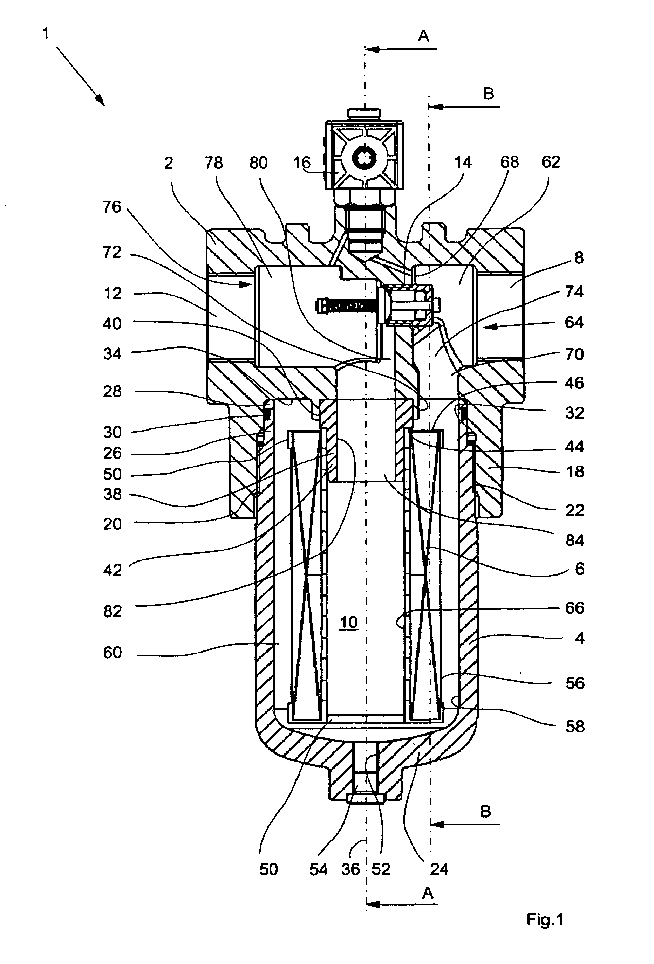

In der Figur 1 ist in einer Vollschnittansicht ein Filter in Form eines hydraulischen Leitungsfilters 1 gezeigt. Derartige Leitungsfilter 1 werden beispielsweise unmittelbar stromabwärts einer Hydropumpe angeordnet und filtern dabei einen gesamten Druckmittelvolumenstrom dieser Hydropumpe. Hierbei handelt es sich dann um einen Hauptstromfilter. Derartige Leitungsfilter 1 können auch in einem hydraulischen Teilkreislauf stromaufwärts vor einem empfindlichen hydraulischen Gerät angeordnet sein.

Der Leitungsfilter 1 hat einen Filterkopf 2, in dem ein topfförmiges Filtergehäuse 4 eingeschraubt ist. In diesem ist ein etwa hohlzylindrisches Filterelement 6 aufgenommen. Über einen im Filterkopf 2 ausgebildeten Zulaufanschluss 8 strömt Druckmittel zum Filterelement 6, durch dieses hindurch und von einem Innenbereich 10 des Filterelements 6 zu einem ebenfalls im Filterkopf 2 ausgebildeten Ablaufanschluss 12. Zwischen den Anschlüssen 8, 12 ist ein Druckventil 14 zwischen den Anschlüssen 8, 12 angeordnet, das bei einer bestimmten Druckdifferenz zwischen dem Anschlüssen 8 und 12 öffnet. Oberhalb in Figur 1 ist in den Filterkopf 2 ein Ver-schmutzungsanzeigeelement 16 eingeschraubt.

Der Filterkopf 2 hat einen etwa in der Figur 1 nach unten sich erstreckenden hohlzylindrischen Kragen 18 zur Aufnahme des Filtergehäuses 4. Mittig an einer Innenseite des Kragens 18 ist ein Innengewinde 20 ausgestaltet. Dieses ist in Eingriff mit einem am Filtergehäuse 4 eingebrachten Außengewinde 22. Dieses ist etwa mittig eines von einem Gehäuseboden 24 wegweisenden Endabschnitt 26 des Filtergehäuses 4 ausgebildet. Der Endabschnitt 26 des Filtergehäuses 4 endet mit einem radial von außen zurückgestuften Dichtbereich 28, in dem ein Dichtring 30 eingesetzt ist. Der Dichtbereich 28 liegt zusammen mit dem Dichtring 30 dichtend an einen Innendichtbereich 32 des Kragens 18 an, wobei der Innendichtbereich 32 einen geringeren Durchmesser als das Innengewinde 20 aufweist. Die Einschraubtiefe des Filtergehäuses 4 in den Filterkopf 2 ist durch die Grundfläche 34 des Kragens 18 begrenzt.

Etwa koaxial zu einer Filterlängsachse 36 ist an der Grundfläche 34 des Filter-kopfs 2 ein von dem Kragen 18 umgriffenes, etwa hohlzylindrisches Halteelement 38 gehaltert. Zum Haltern ist ein an der Grundfläche 34 des Filterkopfs 2 auskragender und das Halteelement 38 umgreifender Haltebund 40 vorgesehen. Das Halteelement 38 ist an einem zum Filterelement 6 weisenden Endabschnitt 42 radial zurückgestuft und bildet hierdurch eine ebenfalls zum Filterelement 6 weisende Anschlagsschulter 44 aus. Das etwa hohlzylindrische Filterelement 6 ist dann auf den Endabschnitt 48 des Halteelements 38 gesteckt und liegt mit einer Stirnseite 46 an der Anschlags-schulter 44 des Halteelements 38 etwa an. Das Filterelement'6 ist an dem von der Stirnseite 46 wegweisenden Endabschnitt 48 und an der Stirnseite 46 mit einem Deckelelement 50 verschlossen.

Der Endabschnitt 48 ist zusammen mit dem Deckelelement 50 des Filterelements 6 etwas zum Gehäuseboden 24 des Filtergehäuses 4 beabstandet. Der Gehäuseboden 24 des Filtergehäuses 4 ist konkav ausgestaltet, wodurch sich beispielsweise feste Stoffe oder Partikel sich in diesem Bereich sammeln können. Etwa koaxial zur Filterlängsachse 36 ist in dem Gehäuseboden 24 eine Durchgangsbohrung 52 eingebracht, die mit einem Verschlusselement 54, beispielsweise einer Schraube, verschließbar ist. Im konkaven Gehäuseboden 24 angesammelte Partikel können somit über die Durchgangsbohrung 52 einfach entfernt werden, ohne dass der gesamte Leitungsfilter 1 demontiert werden muss.

Eine Außenmantelfläche bzw. Außenfläche 56 des Filterelements 6 begrenzt zusammen mit einer Innenfläche 58 des Filtergehäuses 4 einen Zulaufraum 60, über den das Filterelement 6 mit Druckmittel umströmbar ist.

Der Zulauf- und Ablaufanschluss 8, 12 sind in dem Filterkopf 2 etwa senkrecht zur Filterlängsachse 36 eingebracht. Der Zulaufanschluss 8 mündet in einem radial erweiterten und koaxial zum Zulaufanschluss 8 ausgebildeten Radialkanalabschnitt 62 eines Zulaufkanals 64. Die Tiefe des Radialkanalabschnitts 62 entspricht etwa einer Radiendifferenz eines Innenradius des Filtergehäuses 4 und eines Innenradius einer den Innenbereich 10 des Filterelements 6 begrenzenden Innenmantelfläche bzw. Innenfläche 66. Der Radialkanalabschnitt 62 endet mit einer Kanalgrundfläche 68 etwa auf gleicher radialer Höhe wie die Innenfläche 66 des Filterelements 6.

Ein Längskanalabschnitt 70 des Zulaufkanals 64 zweigt von dem Radialkanal-abschnitt 62 aus radial in Richtung des Zulaufraums 60 ab und mündet in der Figur 1 oberhalb der Stirnseite 46 des Filterelements 6 in dem Filtergehäuse 4. Der Längskanalabschnitt 70 ist abschnittsweise etwa bündig mit der Innenfläche 58 des Filtergehäuses 4 und einer Außenmantelfläche 72 des Haltebunds 40 ausgebildet.

Zusätzlich zum Längskanalabschnitt 70 zweigt von dem Radialkanalabschnitt 62 ein Schrägkanalabschnitt 74 zur zusätzlichen Druckmittelverbindung des Zulaufanschlusses 8 mit dem Zulaufraum 60 ab. Der Schrägkanalabschnitt 74 erstreckt sich etwa umlaufend um einen Kreisabschnitt mit einem Außenradius des Haltebunds 40 und mündet in dem in Figur 1 nicht sichtbaren Bereich zwischen dem Haltebund 40 und der Innenfläche 58 des Filtergehäuses 4 in den Zulaufraum 60.

Der Ablaufanschluss 12 ist etwa diametral zum Zulaufanschluss 8 in den Filterkopf 2 eingebracht und über einen Ablaufkanal 76 mit dem Innenbereich 10 des Filterelements 6 verbunden. Der Ablaufkanal 76 hat einen sich etwa koaxial zum Ablaufanschluss 12 erstreckenden Radialkanalanschluss 78, der über die Längsachse 36 hinaus in den Filterkopf 2 erstreckt. Etwa koaxial zur Filterlängsachse 36 zweigt von dem Radialkanalanschluss 78 hin zum Filterelement 6 ein Längskanalabschnitt 80 ab, der sich bis zur Grundfläche 34 des Filterkopfs 2 erstreckt und etwa bündig in einen von einer Innenwandung 82 des Halteelements 38 begrenzten Verbindungskanal 84 übergeht, der wiederum im Innenbereich 10 des Filterelements 6 mündet. Der Verbindungskanal 84 ist ebenfalls etwa koaxial zur Längsachse 36 angeordnet.

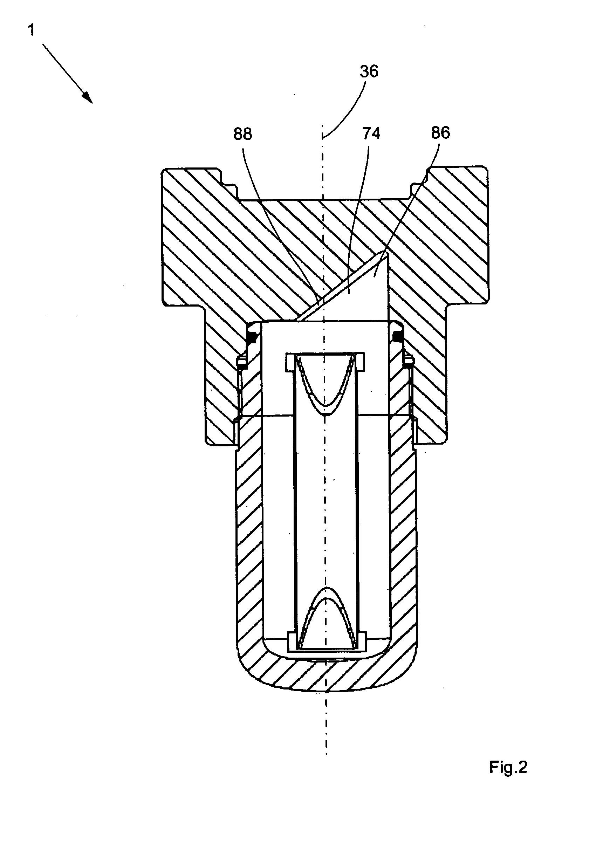

Figur 2 zeigt einen Längsschnitt durch den Leitungsfilter 1, wobei eine Schnittebene des Längsschnitts etwa parallel zur Schnittebene des Vollschnitts aus Figur 1 verläuft und dabei den Schrägkanalabschnitt 74 des Zulaufkanals 64 etwa mittig schneidet. In Figur 2 ist somit ein radial außen liegender Seitenwandungsabschnitt 86 des Schrägkanalabschnitts 74 gezeigt. Der Seitenwandungsabschnitt 86 weist in der Projektionsfläche, in die Zeichenebene der Figur 2 hinein, eine etwa dreiecksförmige Form auf. Eine Hypotenuse bzw. Langseite 88 ist im Wesentlichen in einem 45° Winkel zur Filterlängsachse 36 angestellt. Der Seitenwandungsabschnitt 86 ist etwa umlaufend zu einem Kreis mit dem Innenradius der Innenfläche 58 aus Figur 1 ausgebildet, umläuft diesen Kreis um etwa ein Viertel und ist dabei etwa bündig zur Innenfläche 58 des Filtergehäuses 4 ausgebildet.

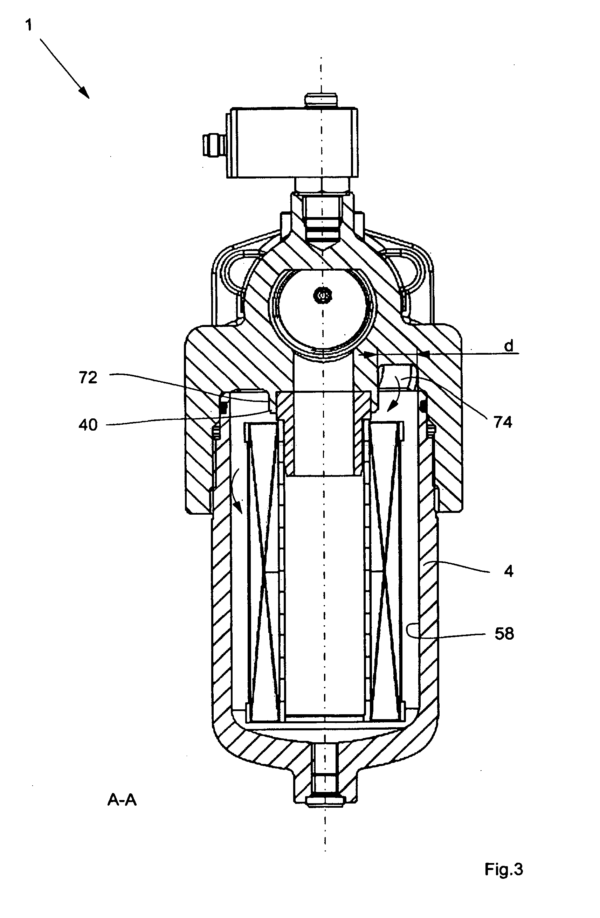

In Figur 3 ist ein weiterer Vollschnitt des Leitungsfilters 1 entlang einer Schnittlinie A-A aus Figur 1 offenbart. Hierbei ist der Schrägkanalabschnitt 74 in einem Querschnitt gezeigt. Eine Breite d des Schrägkanalabschnitts 74 entspricht etwa dem Radialabstand der Innenfläche 58 des Filtergehäuses 4 zur Außenmantelfläche 72 des Haltebunds 40.

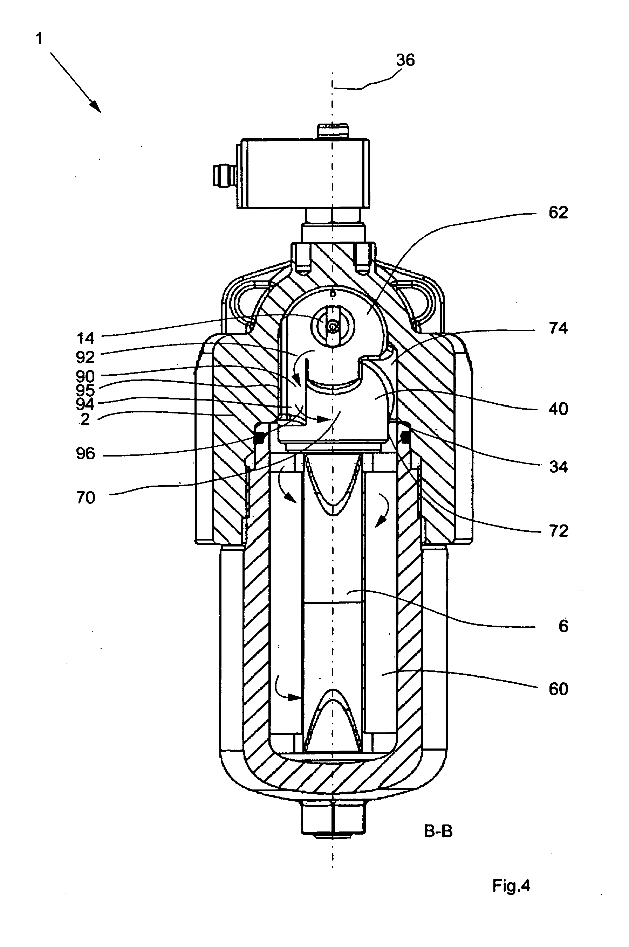

Figur 4 stellt einen Längsschnitt entlang der Schnittlinie B-B aus Figur 1 dar. Hierbei ist der Radialkanalabschnitt 62 in einem Querschnitt gezeigt. Unterhalb und rechts (siehe Figur 4) von dem Druckventil14 zweigt der Schrägkanalabschnitt 74 ab und verläuft entlang der Außenmantelfläche 72 des Haltebunds 40 bis zur Grundfläche 34 des Filterkopfs 2. Die Ausgestaltung des Zulaufs 60 bzw. Schrägkanalabschnitt 74 kann durch die Formgebung und / oder Einbauten erfolgen. In diesem Längsschnitt in Figur 4 ist des Weiteren der Längskanalabschnitt 70 im Querschnitt gezeigt. Dieser hat etwa eine Breite, die im Wesentlichen dem Durchmesser des Radialkanalabschnitts 62 entspricht.

Zwischen den Kanalabschnitten 62 und 70 ist ein Strömungsleitelement 90 ausgebildet. Dieses erstreckt sich etwa parallel zur Filterlängsachse 36 und ist mit einem in Figur 4 oberen Elementabschnitt 92 im Bereich des Radialkanalabschnitts 62 ausgebildet und verläuft bis zu einem unteren Elementabschnitt 94 in einem linken Seitenbereich 95 des Längskanalabschnitts 70. Das Strömungsleitelement 90 ist im Wesentlichen rampenförmig ausgestaltet, wobei eine Rampenoberfläche 96 zur Zeichenoberfläche in Figur 4 derart angewinkelt ist, dass eine in die Zeichenebene hineinströmende Druckmittelströmung durch die Rampenoberfläche 96 in Richtung des Schrägkanalabschnitts 74 umgelenkt ist. Das Strömungsleitelement 90 endet in Richtung der Filterlängsachse 36 etwa an der Grundfläche 34 des Filterkopfs 2 und hat eine Breite, die etwa der des Schrägkanalabschnitts 74 entspricht, die aus Figur 3 ersichtlich ist.

Die Funktionsweise des Leitungsfilters 1 wird nun anhand der Figuren 1 bis 4 erläutert.

Zum Filtern von Druckmittel strömt dieses über den Zulaufanschluss 8 in den Radialkanalabschnitt 62 in Figur 1 und über diesen zum Einen in den Längskanalabschnitt 70 und zum Anderen in den Schrägkanalabschnitt 74. Durch den Schrägkanalabschnitt 74 wird ein Teil des Druckmittels in Tangentialrichtung zusätzlich zur Beschleunigung in Richtung der Filterlängsachse 36 beschleunigt, wodurch das Druckmittel beim Eintreten von dem Schrägkanalabschnitt 74 in den Zulaufraum 60 in eine Zirkulationsbewegung um das Filterelement 6 herum versetzt ist. Die Tagentialbewegung des Druckmittels wird unterstützt durch die Rampenoberfläche 96 des Strömungsleitelements 90 in Figur 4, die das Druckmittel etwa entsprechend den in Figur 4 eingezeichneten Pfeilen hin zum Schrägkanalabschnitt 74 ablenkt. Das Druckmittel, das im Zulaufraum 60 somit eine etwa schraubenförmige Zirkulationsbewegung ausführt, strömt weiter über die Außenfläche 56 des Filterelements 6 in Figur 1 durch dieses hindurch und gelangt über die Innenfläche 66 in den Innenbereich 10 des Filterelements 6, wobei feste Partikel durch das Filterelement 6 wesentlich heraus gefiltert sind. Das Druckmittel strömt dann weiter vom Innenbereich 10 über den Verbindungskanal 84, dem Ablaufkanal 76 zum Ablaufanschluss 12.

Durch die Zirkulationsbewegung des Druckmittels wirkt auf die in diesen mitbewegten festen Partikeln eine Zentrifugalkraft in Richtung zur Innenfläche 58 des Filtergehäuses 4. Die festen Partikel werden durch die Zentrifugalkraft dann in Richtung der Innenfläche 58 bewegt und wandern dann mit dem nach unten zirkulierenden Druckmittel in Figur 1 zum konkaven Gehäuseboden 24, wo sich diese dann ablagern. Abgelagerte Partikel sind durch Öffnen der Durchgangsbohrung 52 aus dem Leitungsfilter 1 entfernbar. Durch dieses Zirkulationsbewegung des Druckmittels wird somit ein wesentlicher Teil der zu filternden Partikel nicht über das Filterelement 6, sondern durch die Zentrifugalkraft aus dem Druckmittel gefiltert, wodurch die Standzeit des, im Vergleich zum Stand der Technik, langsamer verschmutzenden Filterelements 6 führt.

Des Weiteren wird durch die tangentiale Beschleunigung des Druckmittels durch den Schrägkanalabschnitt 74 und dem Strömungsleitelement 90 das Filterelement 6 gleichmäßiger von dem Druckmittel umströmt, wodurch eine einseitige Verschmutzung des Filterelements 6 vermieden ist.

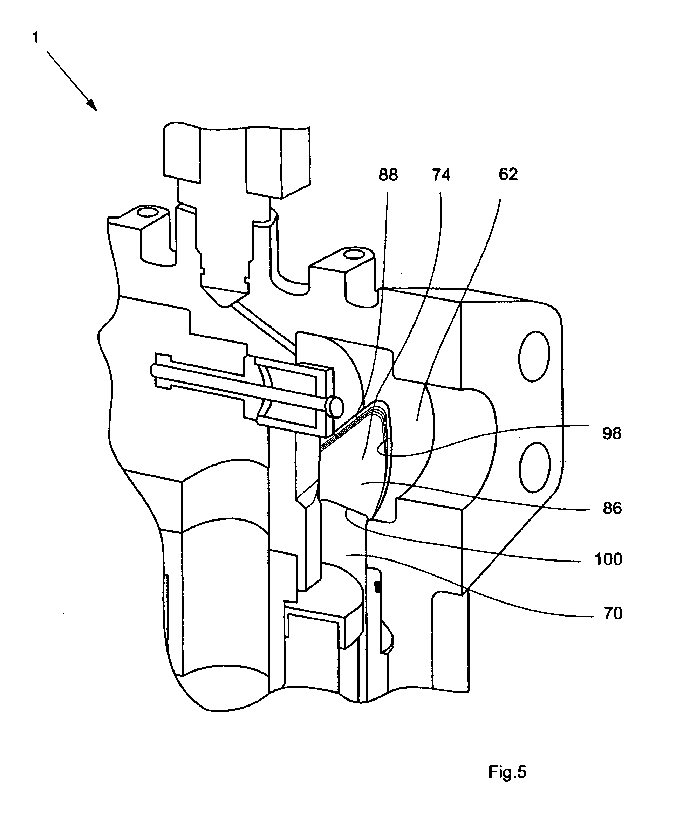

Figur 5 stellt einen Abschnitt des Filterelements 1 aus Figur 1 in einer perspektivischen Schnittansicht dar. Hierbei ist der dreiecksförmige Seitenwandungsabschnitt 86 des Schrägkanalabschnitts 74 erkennbar. Dieser zweigt etwa in gleicher radialer Höhe vom Radialkanalabschnitt 62, wie der Längskanalabschnitt 70 ab. Der Schrägkanalabschnitt 74 ist ,wie aus Figur 5 ersichtlich, mit der schrägen Langseite 88, mit einer etwa in Längsrichtung des Leitungsfilters 1 verlaufenden Querseite 98 und mit einer zum Filtergehäuse 4 geöffneten Unterseite 100 ausgestaltet. Die Langseite 88 und die Querseite 98 sind hin zum Seitenwandungsabschnitt 86 konkav abgerundet, um ein Durchströmen des Schrägkanalabschnitts 74 mit geringen Strömungsturbulenzen zu ermöglichen.

Die Ausgestaltung des Zulaufs 60 und/ oder der Schrägkanalabschnitts 74 kann durch die Formgebung und / oder Einbauten (Filter) erfolgen.

Offenbart ist ein Filter zum Abscheiden fester Stoffe aus einem Druckmittel oder einem Gas. Dieser weist einen Zulauf- und einen Ablaufkanal auf, die in einem Filtergehäuse ausgebildet sind. In dem Filtergehäuse ist ein Filterelement angeordnet. Druckmittel strömt über den Zulaufkanal durch eine Außenfläche des Filterelements in einen Innenbereich und von diesem zu dem Ablaufkanal. Die Außenfläche des Filterelements begrenzt zusammen mit einer Innenfläche des Filtergehäuses einen Zulaufraum, in dem das Druckmittel das Filterelement umgibt. Der Zulaufkanal und/oder der Zulaufraum sind dabei derart ausgestaltet, dass auf das in dem Zulaufraum einströmende Mittel eine etwa radial zum Filtergehäuse hinweisende Zentrifugalkraft wirkt, wodurch die Partikel zusätzlich zum Filterelement aus dem Druckmittel gefiltert werden können.

### Bezugszeichenliste

- 1: Leitungsfilter
- 2: Filterkopf
- 4: Filtergehäuse
- 6: Filterelement
- 8: Zulaufanschluss
- 10: Innenbereich
- 12: Ablaufanschluss
- 14: Druckventil
- 16: Verschmutzungsanzeigeelement
- 18: Kragen
- 20: Innengewinde
- 22: Außengewinde
- 24: Gehäuseboden
- 26: Endabschnitt
- 28: Dichtbereich
- 30: Dichtring
- 32: Innendichtbereich
- 34: Grundfläche
- 36: Filterlängsachse
- 38: Halteelement
- 40: Haltebund
- 42: Endabschnitt
- 44: Anschlagsschulter
- 46: Stirnseite
- 48: Endabschnitt
- 50: Deckelelement
- 52: Durchgangsbohrung
- 54: Verschlusselement
- 56: Außenfläche
- 58: Innenfläche
- 60: Zulaufraum
- 62: Radialkanalabschnitt
- 64: Zulaufkanal
- 66: Innenfläche
- 68: Kanalgrundfläche
- 70: Längskanalabschnitt
- 72: Außenmantelfläche
- 74: Schrägkanalabschnitt
- 76: Ablaufkanal
- 78: Radialkanalanschluss
- 80: Längskanalabschnitt
- 82: Innenwandung
- 84: Verbindungskanal
- 86: Seitenwandungsabschnitt
- 88: Langseite
- 90: Strömungsleitelement
- 92: oberer Elementabschnitt
- 94: unterer Elementabschnitt
- 95: Seitenbereich
- 96: Rampenoberfläche
- 98: Querseite
- 100: Unterseite

## Patentansprüche

1. Filter, insbesondere Hydraulikfilter, zum Abscheiden fester Partikel aus einem Mittel, insbesondere Druckmittel oder Gas, mit einem einen Zulauf- und einen Ablaufkanal (64, 76) aufweisenden Filtergehäuse (4), in dem ein Filterelement (6) angeordnet ist, wobei eine Strömungsrichtung des Mittels von einer Außenfläche (56) des Filterelements (6) zu einem mit dem Ablaufkanal (76) verbundenen Innenbereich (10) des Filterelements (6) vorgesehen ist, wobei die Außenfläche (56) zusammen mit dem Filtergehäuse (4) einen mit dem Zulaufkanal (64) verbundenen Zulaufraum (60) begrenzt, wobei ein Filterkopf (2) das Filtergehäuse (4) stirnseitig verschließt, wobei in dem Filterkopf (2) der Zulauf- und der Ablaufkanal (64, 76) ausgebildet sind, wobei der Zulaufkanal (64) einen schräg zu einer Filterlängsachse (36) sich erstreckenden und etwa zwischen dem Filterelement (6) und dem Filtergehäuse (4) in den Zulaufraum (60) mündenden Schrägkanalabschnitt (74) aufweist, und wobei aufgrund dieser Ausgestaltung des Zulaufkanals (64) auf das in den Zulaufraum (60) einströmende Mittel und auf die festen Partikel eine etwa in Richtung zum Filtergehäuse (4) weisende Zentrifugalkraft wirkt,
**dadurch gekennzeichnet, dass**
der Zulaufkanal (64) im Filterkopf (2) einen radial zur Filterlängsachse (36) sich erstreckenden und mit einem Zulaufanschluss (8) verbundenen Radialkanalabschnitt (62) aufweist, dass im Filterkopf (2) ein etwa parallel zur Filterlängsachse (36) sich erstreckender und in den Zulaufraum (60) mündender Längskanalabschnitt (70) vorhanden ist, und dass der Radialkanalabschnitt (62) sowohl in den Längskanalabschnitt (70) als auch in den Schrägkanalabschnitt (74) einmündet.

2. Filter nach Anspruch 1, wobei das Filtergehäuse (4) etwa topfförmig und das Filterelement (6) etwa hohlzylindrisch ausgestaltet und zueinander und zur Filterlängsachse (36) etwa koaxial angeordnet sind.

3. Filter nach Anspruch 1, wobei etwa im Längskanalabschnitt (70) ein Strömungsleitelement (90) angeordnet ist, das ein über diesen strömendes Mittel in Richtung des Schrägkanalabschnitts (74) lenkt.

4. Filter nach einem der Ansprüche 1 bis 3, wobei ein dem Filterkopf (2) gegenüber liegender Gehäuseboden (24) des Filtergehäuses (4) konkav ausgebildet ist.

5. Filter nach Anspruch 4, wobei der Gehäuseboden (24) des Filtergehäuses (4) etwa in einem Scheitelbereich eine mit einem Verschlusselement (54) verschließbare Durchgangsbohrung (52) aufweist.

6. Filter nach einem der vorhergehenden Ansprüche, wobei dieser ein Leitungsfilter oder Doppelfilter ist.

## Claims

1. Filter, in particular a hydraulic filter, for precipitating solid particles from a medium, in particular a pressure medium or a gas, having a filter housing (4), which has an inlet channel and an outlet channel (64, 76) and in which a filter element (6) is disposed, wherein a direction of flow of the medium from an outer surface (56) of the filter element (6) to an interior (10) of the filter element (6), said interior being connected to the outlet channel (76), is provided, wherein the outer surface (56), together with the filter housing (4), delimits an inlet chamber (60) connected to the inlet channel (64), wherein a filter head (2) closes the filter housing (4) at the end, wherein the inlet channel and the outlet channel (64, 76) are formed in the filter head (2), wherein the inlet channel (64) has an oblique channel section (74) extending obliquely to a longitudinal axis (36) of the filter and opening into the inlet chamber (60) approximately between the filter element (6) and the filter housing (4), and wherein on account of this design of the inlet channel (64) a centrifugal force acting approximately in a direction toward the filter housing (4) acts on the medium flowing into the inlet chamber (60) and on the solid particles,
**characterized in that**
the inlet channel (64) has a radial channel section (62) in the filter head (2), which radial channel section extends radially with respect to the longitudinal axis (36) of the filter and is connected to an inlet port (8), **in that** in the filter head (2), a longitudinal channel section (70) is present, which extends approximately parallel to the longitudinal axis (36) of the filter and opens into the inlet chamber (60), and **in that** the radical channel section (62) opens both into the longitudinal channel section (70) and into the oblique channel section (74).

2. Filter according to Claim 1, wherein the filter housing (4) is of approximately pot-shaped design and the filter element (6) is of approximately hollow cylindrical design, and the housing and the filter element are disposed approximately coaxially with respect to one another and to a longitudinal axis (36) of the filter.

3. Filter according to Claim 1, wherein a flow guiding element (90), which guides a medium flowing over it in the direction of the oblique channel section (74), is disposed in the longitudinal channel section (70), for instance.

4. Filter according to one of Claims 1 to 3, wherein a housing base (24) of the filter housing (4), said base lying opposite the filter head (2), is of concave design.

5. Filter according to Claim 4, wherein, approximately in a vertex region, the housing base (24) of the filter housing (4) has a through hole (52) that can be closed by means of a stopper element (54).

6. Filter according to one of the preceding claims, wherein said filter is an inline filter or duplex filter.

## Revendications

1. Filtre, en particulier filtre hydraulique, pour séparer des particules solides d'un fluide, en particulier d'un fluide sous pression ou d'un gaz, comprenant un boîtier de filtre (4) présentant un canal d'alimentation et un canal de sortie (64, 76), dans lequel est disposé un élément filtrant (6), une direction d'écoulement du fluide depuis une surface extérieure (56) de l'élément filtrant (6) jusqu'à une région interne (10) de l'élément filtrant (6) connectée au canal de sortie (76) étant prévue, la surface extérieure (56) délimitant, conjointement avec le boîtier de filtre (4), un espace d'alimentation (60) connecté au canal d'alimentation (64), une tête de filtre (2) fermant le boîtier de filtre (4) du côté frontal, le canal d'alimentation et le canal de sortie (64, 76) étant réalisés dans la tête de filtre (2), le canal d'alimentation (64) présentant une portion de canal oblique (74) s'étendant obliquement par rapport à un axe longitudinal du filtre (36) et débouchant approximativement entre l'élément filtrant (6) et le boîtier de filtre (4) dans l'espace d'alimentation (60), et du fait de cette configuration du canal d'alimentation (64), une force centrifuge orientée approximativement dans la direction du boîtier de filtre (4) agissant sur le fluide affluant dans l'espace d'alimentation (60) et sur les particules solides,
**caractérisé en ce que** le canal d'alimentation (64) présente dans la tête de filtre (2) une portion de canal radiale (62) s'étendant radialement par rapport à l'axe longitudinal du filtre (36) et connectée à un raccord d'alimentation (8), **en ce qu'**une portion de canal longitudinale (70) s'étendant approximativement parallèlement à l'axe longitudinal du filtre (36) et débouchant dans l'espace d'alimentation (60) est prévue dans la tête de filtre (2), et **en ce que** la portion de canal radiale (62) débouche à la fois dans la portion de canal longitudinale (70) et dans la portion de canal oblique (74).

2. Filtre selon la revendication 1, dans lequel le boîtier de filtre (4) est configuré approximativement en forme de pot et l'élément filtrant (6) est configuré approximativement sous forme cylindrique creuse et tous deux sont disposés approximativement coaxialement l'un par rapport à l'autre et par rapport à l'axe longitudinal du filtre (36).

3. Filtre selon la revendication 1, dans lequel un élément de guidage de l'écoulement (90) est disposé approximativement dans la portion de canal longitudinale (70), lequel dévie un fluide s'écoulant par le biais de celui-ci dans la direction de la portion de canal oblique (74).

4. Filtre selon l'une quelconque des revendications 1 à 3, dans lequel un fond de boîtier (24) du boîtier de filtre (4) opposé à la tête de filtre (2) est réalisé sous forme concave.

5. Filtre selon la revendication 4, dans lequel le fond de boîtier (24) du boîtier de filtre (4) présente approximativement dans une région de sommet un alésage traversant (52) pouvant être fermé avec un élément de fermeture (54).

6. Filtre selon l'une quelconque des revendications précédentes, celui-ci étant un filtre de conduite ou un filtre double.
